# EUROPEAN PATENT APPLICATION

(11) **EP 2 878 776 A1**
(43) Date of publication of application: **03.06.2015**
(21) Application number: 13803835.1
(22) Date of filing: 11.06.2013
(51) Int. Cl.: F01N 3/025

(54) **BURNER FOR EXHAUST GAS PURIFICATION DEVICE**

(30) Priority: 15.06.2012 JP 2012135635
(71) Applicant: Hino Motors, Ltd., Hino-shi, Tokyo 191-8660 (JP)
(72) Inventor: SHIBUYA, Ryo, Hino-shi Tokyo 191-8660 (JP); TSUMAGARI, Ichiro, Hino-shi Tokyo 191-8660 (JP)
(74) Representative: Tranter, Andrew David
(86) International application number: PCT/JP2013/066027
(87) International publication number: WO 2013/187389

(57) **Abstract**

A burner for an exhaust gas purification device includes: an exhaust pipe (11A) through which exhaust gas from the engine flows; a tube-shaped flame stabilizer (16) which has a space (20) in which fuel combusts; and an exhaust gas supply pipe (40) which is connected to the exhaust pipe (11A) and to the flame stabilizer (16) and which supplies exhaust gas into the space (20) in the flame stabilizer (16).

## Description

### TECHNICAL FIELD

The techniques of the present disclosure relate to a burner for an exhaust gas purification device that raises the temperature of exhaust gas, and the burner is applied to an exhaust gas purification device for purifying exhaust gas from an engine.

### BACKGROUND ART

In a conventional diesel engine, an exhaust gas purification device for purifying exhaust gas is arranged in an exhaust pipe. The exhaust gas purification device includes a diesel particulate filter (DPF) for capturing particulate matter (PM), e.g., contained in exhaust gas. In the DPF, a regeneration process of burning the particulate matter captured by the DPF is performed to maintain the function of capturing particulate matter.

For example, Patent Document 1 discloses an exhaust gas purification device, in which a burner for an exhaust gas purification device is arranged upstream of a DPF. Exhaust gas at the temperature raised by the burner is drawn into the DPF to perform a regeneration process of the DPF. In the burner, fuel for the engine and air for combustion are supplied to a combustion area, which is an inner space of a tubular flame stabilizer with a closed end. Thus, mixture of the fuel and the air for combustion is generated. The combustion gas produced by combusting the air-fuel mixture by ignition is mixed with exhaust gas to raise the temperature of the exhaust gas.

### PRIOR ART DOCUMENT

### Patent Document

Patent Document 1: Japanese Laid-Open Patent Publication No. 2011-185493

### SUMMARY OF the INVENTION

### Problems that the Invention is to Solve

Even in the aforementioned burner for an exhaust gas purification device, emission of NOx is unavoidable as long as fuel is combusted. Thus, a burner for an exhaust gas purification device that reduces an emission amount of NOx is desired.

The techniques of the present disclosure have an objective to provide a burner for an exhaust gas purification device that is capable of reducing an emission amount of NOx.

### Means for Solving the Problems

According to one aspect of the present disclosure, a burner for an exhaust gas purification device comprises an exhaust pipe, through which exhaust gas flows from an engine, a tubular flame stabilizer having a space in which fuel is combusted, and an exhaust supply pipe that is connected to the exhaust pipe and the flame stabilizer and supplies the exhaust gas to the space inside the flame stabilizer.

According to the above configuration, the exhaust gas is supplied to the space, in which the fuel is combusted. Thus, the oxygen concentration of the space, in which the fuel is combusted, is decreased compared to the configuration without supply of exhaust gas. As a result, the combustion temperature in the space, in which the fuel is combusted, decreases, and the emission amount of NOx is suppressed.

According to another aspect of the present disclosure, in the burner for an exhaust gas purification device, the exhaust pipe is connected to an exhaust gas purification device for purifying exhaust gas, and the exhaust supply pipe is connected to a portion of the exhaust pipe that is located upstream of the exhaust gas purification device, so that the exhaust gas flows into the exhaust supply pipe from the exhaust pipe.

According to the above configuration, some of the exhaust gas before passing through the exhaust gas purification device flows into the exhaust supply pipe. For this reason, compared to when some of the exhaust gas that has passed through the exhaust gas purification device again flows into the exhaust gas purification device through the exhaust supply pipe, the amount of exhaust gas passing through the exhaust gas purification device is decreased. As a result, the exhaust gas purification device reduces the degree of decline of exhaust efficiency. This suppresses the decrease of the fuel consumption and the decrease of the engine output, which are caused by supplying some of the exhaust gas to the flame stabilizer.

According to another aspect of the present disclosure, the burner for an exhaust gas purification device further comprises an adjustment portion for adjusting an amount of the exhaust gas flowing from the exhaust pipe into the exhaust supply pipe. The adjustment portion has an inhibition state in which flow of the exhaust gas into the exhaust supply pipe is inhibited and a promotion state in which the flow of the exhaust gas into the exhaust supply pipe is promoted, and the inhibition state is switched to the promotion state when combustion of the fuel is started in the space inside the flame stabilizer.

The exhaust gas that has flowed into the exhaust supply pipe passes through the exhaust supply pipe and the space inside the flame stabilizer. Thus, compared to when the exhaust gas does not flow into the exhaust supply pipe but flows only through the exhaust pipe, the pressure loss increases. In this point, according to the above configuration, when the process of raising the temperature of exhaust gas is started, the state of the adjustment portion is switched from the inhibition state to the promotion state. For this reason, compared to when the flow of exhaust gas into the exhaust supply pipe is not inhibited during the stop of the burner, in which the process of raising the temperature of exhaust gas is not executed, the pressure loss of the exhaust gas is reduced during the stop. This reduces the degree of decline of the exhaust efficiency caused by the exhaust gas flowing through the exhaust supply pipe and the space inside the flame stabilizer. This limits the decrease of the fuel consumption and the decrease of the engine output.

According to another aspect of the present disclosure, in the burner for an exhaust gas purification device, the adjustment portion includes a variable valve for changing a flow path cross-sectional area of the exhaust supply pipe, and the variable valve is maintained in a closed state in the inhibition state.

According to the above configuration, the variable valve is maintained in the closed state in the inhibition state, and the exhaust gas is prohibited from flowing into the exhaust supply pipe from the exhaust pipe. This further reduces the degree of decline of the exhaust efficiency when the exhaust gas flows through the exhaust supply pipe and the space inside the flame stabilizer. This further suppresses the decrease of the fuel consumption and the decrease of the engine output.

According to another aspect of the present disclosure, in the burner for an exhaust gas purification device, the adjustment portion includes an exhaust throttle valve for changing a flow path cross-sectional area of the exhaust pipe, and the exhaust throttle valve is arranged in a portion of the exhaust pipe that is located upstream of the exhaust gas purification device and downstream of a connection between the exhaust pipe and the exhaust supply pipe.

The above configuration promotes the flow of exhaust gas from the exhaust pipe to the exhaust supply pipe when the flow path cross-sectional area of the exhaust pipe is decreased by the exhaust throttle valve, compared to the configuration without the exhaust throttle valve arranged in the exhaust pipe. For this reason, the range of the amount of the exhaust gas supplied to the flame stabilizer is expanded.

According to another aspect of the present disclosure, the burner for an exhaust gas purification device further comprises a fuel supply unit for supplying fuel to the space inside the flame stabilizer and a temperature sensor for sensing a temperature of the space inside the flame stabilizer. The fuel supply unit supplies the fuel when a sensed value of the temperature sensor exceeds a predetermined threshold.

As the temperature of the space inside the flame stabilizer is decreased, vaporization of the fuel supplied to the space inside the flame stabilizer is suppressed, and it is difficult to ignite the air-fuel mixture containing the fuel. In this point, according to the above configuration, the fuel supply unit starts supply of the fuel after the temperature of the space inside the flame stabilizer exceeds the threshold. This facilitates vaporization of the fuel in the space inside the flame stabilizer, and the ignitability of the air-fuel mixture is improved.

According to another aspect of the present disclosure, the burner for an exhaust gas purification device further comprises an air supply pipe for supplying air to the space inside the flame stabilizer and an air valve that is arranged in the air supply pipe and changes a flow path cross-sectional area of the air supply pipe. The air valve is in a closed state when the fuel is combusted in the space inside the flame stabilizer.

For example, when the engine is in a low speed state, with low load and the oxygen concentration of exhaust gas is sufficiently high, it is possible to generate air-fuel mixture with fuel and exhaust gas. In this point, according to the above configuration, the air valve is in a closed state during the process of raising the temperature of exhaust gas. Thus, compared to the configuration in which air is constantly supplied to the space inside the flame stabilizer during the process of raising the temperature of exhaust gas, the amount of the air supplied to the space inside the flame stabilizer is small. As a result, e.g., with the configuration that the air supply pipe is connected to the intake pipe of the engine, the decrease of the intake air amount of the engine is suppressed. Also, e.g., with the configuration in which a device using the engine as a power source supplies the air flowing through the air supply pipe, the decrease of the engine output is suppresses.

According to another aspect of the present disclosure, the burner for an exhaust gas purification device further comprises a first partition portion that partitions off a joining chamber in the flame stabilizer, wherein the exhaust gas joins air in the joining chamber.

According to the above configuration, before flowing into the space inside the flame stabilizer, the air and the exhaust gas are mixed in the joining chamber. For this reason, compared to the configuration in which the exhaust gas and the air are separately supplied to the space inside the flame stabilizer, unbalance in the oxygen concentration is suppressed in the space inside the flame stabilizer. As a result, the emission amount of NOx is suppressed.

According to another aspect of the present disclosure, the burner for an exhaust gas purification device further comprises a second partition portion that partitions off a premixing chamber in the flame stabilizer, wherein air-fuel mixture containing the fuel, the exhaust gas, and air is generated in the premixing chamber, and an ignition portion that is arranged in the space inside the flame stabilizer and ignites the air-fuel mixture generated in the premixing chamber.

According to the above configuration, the exhaust gas is contained in the air-fuel mixture generated in the premixing chamber. Thus, combustion with a low oxygen concentration progresses in the space inside the flame stabilizer, and the combustion temperature decreases. This suppresses the emission amount of NOx. Furthermore, compared to the configuration in which air-fuel mixture is generated near the ignition portion, mixing of the air-fuel mixture is carried out over a long path. As a result, it is unlikely for the combustion temperature to locally increase in the space inside the flame stabilizer. This further suppresses the emission amount of NOx.

### BRIEF DESCRIPTION OF the DRAWINGS

Fig. 1 is a schematic view of an exhaust gas purification device including a burner for an exhaust gas purification device according to a first embodiment in the techniques of the present disclosure;
Fig. 2 is a chart that schematically shows a map for setting opening degrees of a variable valve and an exhaust throttle valve according to the first embodiment;
Fig. 3 is a chart that schematically shows a map for setting an opening degree of an air valve according to the first embodiment;
Fig. 4 is a flowchart that shows a procedure of a regeneration process of a DPF according to the first embodiment;
Fig. 5 is a schematic view of a burner for an exhaust gas purification device according to a second embodiment;
Fig. 6 is a cross-sectional view taken along line 6-6 of Fig. 5;
Fig. 7 is a cross-sectional view taken along line 7-7 of Fig. 5; and
Fig. 8 is an arrangement of a burner for an exhaust gas purification device in a modification.

### MODES FOR CARRYING OUT THE INVENTION

### First Embodiment

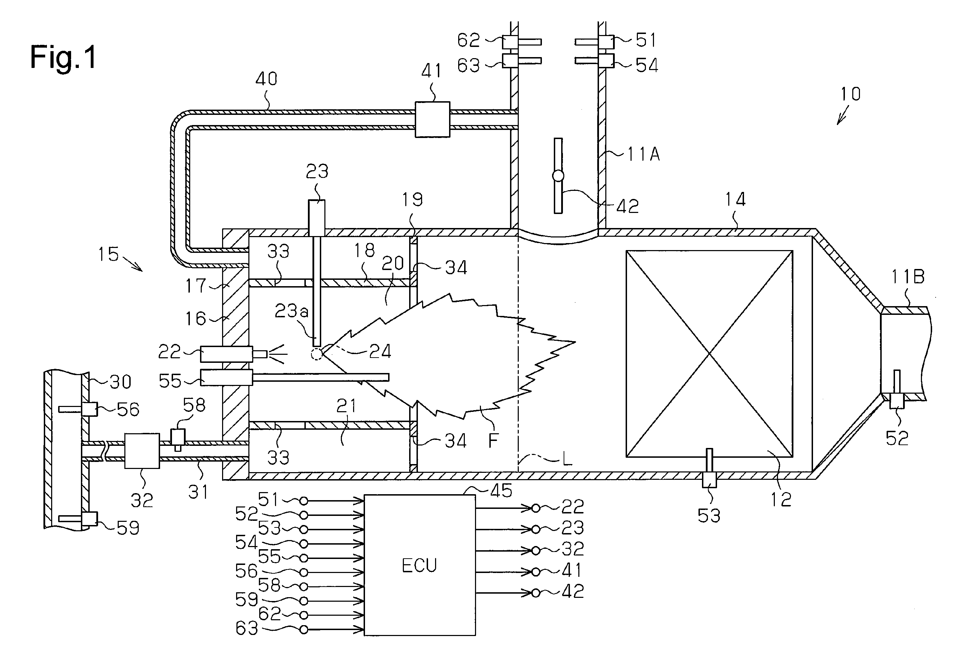

A burner for an exhaust gas purification device according to a first embodiment in the techniques of the present disclosure will now be described with reference to Figs. 1 to 4. First, a general configuration of an exhaust gas purification device to which a burner for an exhaust gas purification device is applied will now be described with reference to Fig. 1.

As shown in Fig. 1, an exhaust gas purification device 10 for a diesel engine includes a cylindrical tube housing 14. An upstream exhaust pipe 11A, which is one example of an exhaust pipe, is connected to a circumferential wall of the housing 14. The upstream exhaust pipe 11A is connected to the circumferential wall of the housing 14 downstream of the flame stabilizer 16 in the axial direction of the housing 14. The exhaust gas that has passed through a turbine of a turbocharger flows through the upstream exhaust pipe 11A.

A downstream exhaust pipe 11 B is connected to a right end of the housing 14 as viewed in Fig. 1. The exhaust gas that has passed through the housing 14 flows into the downstream exhaust pipe 11 B. The housing 14 accommodates a diesel particulate filter 12 (hereinafter, referred to as a DPF 12), which captures particulate matter contained in exhaust gas.

The DPF 12 has a honeycomb structure made of, e.g., porous silicon carbide and captures particulate matter of exhaust gas with pillar-like inner wall surfaces, which constitute the honeycomb structure. A burner 15 for an exhaust gas purification device (hereinafter, simply referred to as a burner 15) for raising the temperature of exhaust gas flowing into the DPF 12 is connected to a portion upstream of the DPF 12. The burner 15 burns particulate matter deposited on the DPF 12 and removes it from the DPF 12.

The flame stabilizer 16 of the burner 15 has a tubular shape with a closed end, in particular, a cylindrical tube. The flame stabilizer 16 has a basal wall 17, whose outer edge is coupled to the left end of the housing 14. The portion of the housing 14 that is connected to the basal wall 17 of the flame stabilizer 16 constitutes a portion of the flame stabilizer 16.

A circumferential wall of an inner tube 18 is fixed to the basal wall 17 of the flame stabilizer 16. The diameter of the circumferential wall is smaller than the diameter of the housing 14. An annular closing plate 19 is fixed to the circumferential wall at a distal end of the inner tube 18. The closing plate 19 closes a gap between an outer circumferential face of the inner tube 18 and an inner circumferential face of the housing 14.

The inner cross-section of the housing 14 that is orthogonal to the axial direction of the housing 14 and includes the upstream exhaust pipe 11A is defined as a boundary, which is indicated with a long dashed double-short dashed line L in Fig. 1.

The space defined by the housing 14 is partitioned to form a combustion area 20. The combustion area 20 includes a space surrounded by a circumferential wall of the inner tube 18 and a space between the closing plate 19 and the boundary. In other words, the flame stabilizer 16 has the combustion area 20 as a space for combusting fuel.

The space defined by the housing 14 is partitioned to form a joining chamber 21, in which exhaust gas joins air. The joining chamber 21 is sandwiched by the inner circumferential face of the housing 14 and the outer circumferential face of the inner tube 18 and sandwiched by the basal wall 17 and the closing plate 19. The housing 14, the inner tube 18, the basal wall 17, and the closing plate 19 serve as one example of a first partition portion, which partitions the inside of the flame stabilizer 16 to form the joining chamber 21. The portion of the housing 14 that surrounds the circumferential wall of the inner tube 18 and holds the basal wall 17 and the closing plate 19 functions as an outer tube, which constitutes the joining chamber 21.

A fuel supply unit 22 is fixed to a part of the basal wall 17 of the flame stabilizer 16. The fuel supply unit 22 is located inside a portion of the basal wall 17 connected to the circumferential wall of the inner tube 18. The fuel supply unit 22 is a known fuel injection nozzle whose distal portion includes an injection port and is arranged in the combustion area 20. The fuel supply unit 22 has a fuel valve (not shown), which is connected to a fuel pump for supplying fuel to the engine (not shown), and supplies atomized fuel to the combustion area 20 by injecting the fuel into the combustion area 20.

A spark plug 23 is fixed to the circumferential wall of the housing 14. An ignition portion 23a, which is a distal portion of the spark plug 23, is arranged in the combustion area 20 and faces the distal portion of the fuel supply unit 22 in the axial direction of the flame stabilizer 16. The spark plug 23 generates sparks in the combustion area 20 to ignite air-fuel mixture containing the fuel supplied by the fuel supply unit 22 at an ignition point 24. This produces combustion gas containing flame F in the combustion area 20.

An air supply pipe 31 is fixed to the basal wall 17 of the flame stabilizer 16 and connects an intake pipe 30 to the joining chamber 21. The intake air compressed by the compressor of the turbocharger flows through the intake pipe 30. Some of the intake air flowing through the intake pipe 30 is introduced to the joining chamber 21 as air for combustion through the air supply pipe 31.

An air valve 32 for changing a flow path cross-sectional area of the air supply pipe 31 is attached to a portion of the air supply pipe 31. Some of the intake air flowing through the intake pipe 30 flows into the joining chamber 21 through the air supply pipe 31 when the air valve 32 is in an open state. The air that has flowed into the joining chamber 21 is introduced to the combustion area 20 through first introduction ports 33 formed in the inner tube 18 and introduced to the combustion area 20 through second introduction ports 34 formed in the closing plate 19.

An exhaust supply pipe 40 is fixed to the basal wall 17 of the flame stabilizer 16 and connects the upstream exhaust pipe 11A and the joining chamber 21. Exhaust gas flows through the upstream exhaust pipe 11A. Some of the exhaust gas flowing through the upstream exhaust pipe 11A is introduced to the joining chamber 21 as exhaust gas for combustion through the exhaust supply pipe 40.

The exhaust supply pipe 40, which is one example of an exhaust supply pipe, is a pipe with a smaller flow path cross-sectional area than the upstream exhaust pipe 11A. A variable valve 41 is attached to a portion of the exhaust supply pipe 40. The variable valve 41, which constitutes an adjustment portion, is a valve for changing the flow path cross-sectional area of the exhaust supply pipe 40. In other words, the variable valve 41 adjusts the amount of exhaust gas flowing from the upstream exhaust pipe 11A to the exhaust supply pipe 40. Some of the exhaust gas flowing through the upstream exhaust pipe 11A flows into the joining chamber 21 through the exhaust supply pipe 40 when the variable valve 41 is in an open state. The exhaust gas that has flowed into the joining chamber 21 is introduced to the combustion area 20 through the first introduction ports 33 formed in the inner tube 18 and through the second introduction ports 34 formed in the closing plate 19.

An exhaust throttle valve 42 is attached to a part of the upstream exhaust pipe 11A that is downstream of the connection between the upstream exhaust pipe 11A and the exhaust supply pipe 40. The exhaust throttle valve 42 constitutes an adjustment portion and is a valve for changing the flow path cross-sectional area of the upstream exhaust pipe 11A. In other words, the exhaust throttle valve 42 adjusts the amount of exhaust gas flowing from the upstream exhaust pipe 11A to the exhaust supply pipe 40. The exhaust throttle valve 42 promotes the flow of exhaust gas into the exhaust supply pipe 40 by relatively decreasing the flow path cross-sectional area of the upstream exhaust pipe 11A. Further, the exhaust throttle valve 42 suppresses or inhibits the flow of exhaust gas into the exhaust supply pipe 40 by relatively increasing the flow path cross-sectional area of the upstream exhaust pipe 11A. In Fig. 1, the exhaust throttle valve 42 is maintained at a maximum opening degree VPb4, at which the flow path cross-sectional area of the upstream exhaust pipe 11A is maximized.

The electrical configuration of the burner 15 configured as above will now be described with reference to Figs. 1 to 4.

In the burner 15, an electronic control unit (ECU) 45, which is a control portion, controls fuel supply of the fuel supply unit 22, ignition of the spark plug 23, the opening degree of the air valve 32, the opening degree of the variable valve 41, and the opening degree of the exhaust throttle valve 42. The ECU 45 includes a CPU, a ROM, which stores various control programs and various data, a RAM, which temporarily stores computed results and various data in various computations, and the like. The ECU 45 executes various processes based on the control programs stored in the ROM. In the present embodiment, a regeneration process, which burns particulate matter deposited on the DPF 12, will be described as an example of a process of raising the temperature of exhaust gas by the burner 15.

As shown in Fig. 1, an upstream exhaust flow sensor 51 is attached to a part of the upstream exhaust pipe 11A that is upstream of the connection with the exhaust supply pipe 40. The upstream exhaust flow sensor 51 outputs a detection signal indicating an upstream exhaust flow rate QA, which is a mass flow rate of the exhaust gas flowing through the upstream exhaust pipe 11A. The detection signal is input to the ECU 45 at predetermined control periods.

An upstream exhaust pressure sensor 62 is attached to a part of the upstream exhaust pipe 11A that is upstream of the connection with the exhaust supply pipe 40. The upstream exhaust pressure sensor 62 outputs a detection signal indicating an upstream exhaust pressure PA, which is a pressure of the exhaust gas flowing through the upstream exhaust pipe 11A. The detection signal is input to the ECU 45 at predetermined control periods.

An upstream exhaust temperature sensor 63 is attached to a part of the upstream exhaust pipe 11A that is upstream of the connection with the exhaust supply pipe 40. The upstream exhaust temperature sensor 63 outputs a detection signal indicating an upstream exhaust temperature TA, which is a temperature of the exhaust gas flowing through the upstream exhaust pipe 11A. The detection signal is input to the ECU 45 at predetermined control periods.

A downstream exhaust pressure sensor 52 is attached to the downstream exhaust pipe 11 B. The downstream exhaust pressure sensor 52 outputs a detection signal indicating a downstream exhaust pressure PB, which is a pressure of the exhaust gas flowing through the downstream exhaust pipe 11 B. The detection signal is input to the ECU 45 at predetermined control periods.

Based on the upstream exhaust pressure PA sensed by the upstream exhaust pressure sensor 62 and the downstream exhaust pressure PB sensed by the downstream exhaust pressure sensor 52, the ECU 45 calculates a differential pressure ΔP between the upstream exhaust pressure PA and the downstream exhaust pressure PB at predetermined control periods.

A DPF temperature sensor 53 inputs a detection signal indicating a DPF temperature Td, which is a temperature of the DPF 12, to the ECU 45 at predetermined control periods.

An oxygen concentration sensor 54 is attached to a part of the upstream exhaust pipe 11A that is upstream of the connection with the exhaust supply pipe 40. The oxygen concentration sensor 54 inputs a detection signal indicating an oxygen concentration Oxc of the exhaust gas flowing through the upstream exhaust pipe 11A to the ECU 45 at predetermined control periods.

A temperature sensor 55 senses a temperature of gas in the combustion area 20 and inputs a detection signal indicating a combustion area temperature Ta, which is a temperature of the combustion area 20, to the ECU 45 at predetermined control periods.

An intake air flow sensor 56 is attached to the intake pipe 30 upstream of the connection with the air supply pipe 31. The intake air flow sensor 56 inputs a detection signal indicating an intake air amount QC, which is a mass flow rate of the intake air flowing through the intake pipe 30, to the ECU 45 at predetermined control periods.

An air temperature sensor 59 is attached to a part of the intake pipe 30 that is downstream of the connection with the air supply pipe 31. The air temperature sensor 59 inputs a detection signal indicating an air temperature TC, which is a temperature of the intake air flowing through the intake pipe 30, to the ECU 45 at predetermined control periods.

An air circulation flow sensor 58 is attached to a part of the air supply pipe 31 that is downstream of the air valve 32. The air circulation flow sensor 58 inputs a detection signal indicating an air circulation amount QCD, which is a mass flow rate of the air flowing through the air supply pipe 31, to the ECU 45 at predetermined control periods.

The ECU 45 calculates a deposition amount M of particulate matter on the DPF 12 based on the upstream exhaust flow rate QA detected by the upstream exhaust flow sensor 51 and the differential pressure ΔP between the upstream exhaust pressure PA and the downstream exhaust pressure PB. The ECU 45 executes the regeneration process of the DPF 12 if the calculated deposition amount M is greater than a predefined threshold α. The ECU 45 finishes the regeneration process when the deposition amount M of particulate matter calculated during execution of the regeneration process becomes less than a threshold β (β < α), which is a predefined threshold and with which it is appropriate to determine that the particulate matter deposited on the DPF 12 is sufficiently removed.

In the regeneration process, the ECU 45 calculates a fuel injection amount Qf per unit of time, with which the fuel supply unit 22 injects fuel into the combustion area 20, based on the upstream exhaust flow rate QA detected by the upstream exhaust flow sensor 51, the upstream exhaust temperature TA sensed by the upstream exhaust temperature sensor 63, the air circulation amount QCD detected by the air circulation flow sensor 58, the air temperature TC sensed by the air temperature sensor 59, the DPF temperature Td sensed by the DPF temperature sensor 53, and a target temperature of the DPF 12 in the regeneration process. The fuel injection amount Qf is an amount of fuel necessary for raising the temperature of the DPF 12 to the target temperature by raising the temperature of the exhaust gas flowing into the DPF 12. The ECU 45 outputs a control signal to the fuel supply unit 22 to inject fuel with the calculated fuel injection amount Qf into the combustion area 20. The fuel supply unit 22 injects fuel according to the control signal input to the fuel supply unit 22.

In the regeneration process, the ECU 45 outputs a control signal to the spark plug 23 that drives the spark plug 23. When receiving the control signal, the spark plug 23 generates sparks near the ignition point 24.

In the regeneration process, the ECU 45 outputs a control signal indicating an opening degree of the variable valve 41 at predetermined control periods. The variable valve 41 is controlled at the opening degree according to the control signal input to the variable valve 41. Upon completion of the regeneration process, the ECU 45 outputs a control signal to the variable valve 41 that indicates maintaining the opening degree of the variable valve 41 to be a minimum opening degree VPa1. In other words, during the stop of the burner 15, the exhaust supply pipe 40 is maintained in a blocked state, in which the flow of exhaust gas from the upstream exhaust pipe 11A into the exhaust supply pipe 40 is blocked.

In the regeneration process, the ECU 45 outputs a control signal indicating an opening degree of the exhaust throttle valve 42 at predetermined control periods. The exhaust throttle valve 42 is controlled at the opening degree according to the control signal input to the exhaust throttle valve 42. Upon completion of the regeneration process, the ECU 45 outputs a control signal to the exhaust throttle valve 42 that indicates maintaining the opening degree of the exhaust throttle valve 42 to be a maximum opening degree VPb4. In other words, during the stop of the burner 15, the upstream exhaust pipe 11A is maintained in a state in which a flow resistance based on the opening degree of the exhaust throttle valve 42 is minimized.

In the regeneration process, the ECU 45 outputs a control signal indicating an opening degree of the air valve 32 at predetermined control periods. The air valve 32 is controlled at the opening degree according to the control signal input to the air valve 32. Upon completion of the regeneration process, the ECU 45 outputs a control signal to the air valve 32 that indicates maintaining the opening degree of the air valve 32 to be a minimum opening degree VPc1. In other words, the air supply pipe 31 during the stop of the burner 15 is maintained in a blocked state, in which the flow of intake air from the intake pipe 30 into the air supply pipe 31 is blocked.

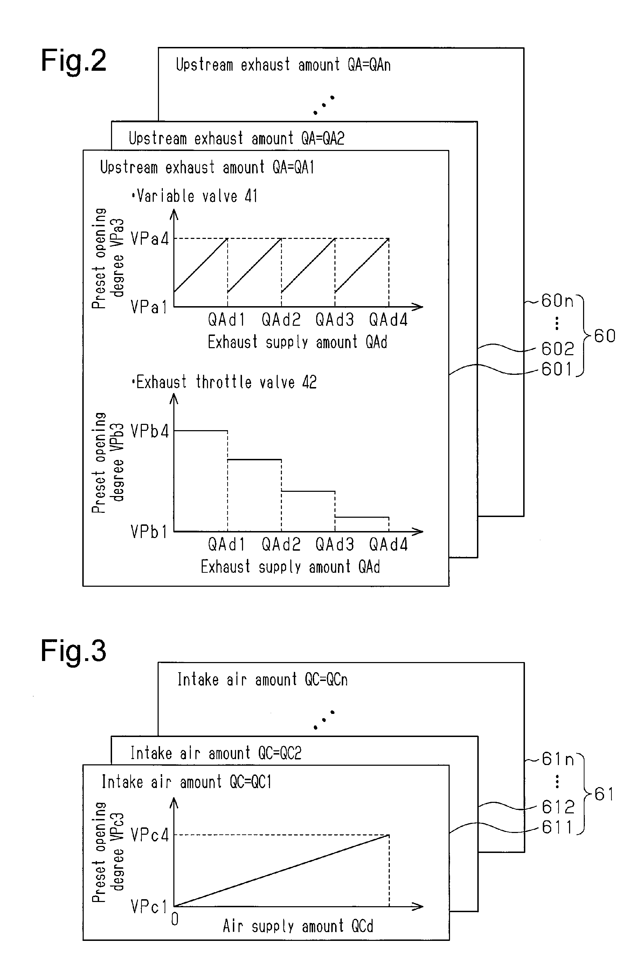

The ECU 45 sets the opening degree of the variable valve 41, the opening degree of the exhaust throttle valve 42, and the opening degree of the air valve 32. One example of a method for setting these will now be described with reference to Figs. 2 and 3. Since intake air is ambient air, the ECU 45 stores a predetermined oxygen concentration as an oxygen concentration of the intake air, which is higher than the oxygen concentration of exhaust gas.

When the combustion area temperature Ta, which is a detection value of the temperature sensor 55, is less than or equal to an ignitable temperature Ti at the start of the regeneration process, the ECU 45 outputs a control signal indicating a maximum opening degree VPa4 to the variable valve 41, a control signal indicating a preset opening degree VPb2 set in advance according to the upstream exhaust flow rate QA to the exhaust throttle valve 42, and a control signal indicating a minimum opening degree VPc1 to the air valve 32. The ignitable temperature Ti is a temperature of the combustion area 20 at which fuel injected into the combustion area 20 is easily vaporized, and air-fuel mixture is ignited at a greater probability than or equal to a predetermined probability.

When the combustion area temperature Ta exceeds the ignitable temperature Ti at the start of the regeneration process, the ECU 45 calculates the fuel injection amount Qf based on the upstream exhaust flow rate QA, the upstream exhaust temperature TA, the air circulation amount QCD, the air temperature TC, the DPF temperature Td, and the target temperature of the DPF 12. When the fuel injection amount Qf is calculated, the ECU 45 calculates an oxygen amount according to the fuel injection amount Qf, i.e., a necessary oxygen amount Oxn, which is an oxygen amount per unit of time necessary for combusting the fuel injection amount Qf of fuel.

The ECU 45 calculates an exhaust supply amount QAd, which is a divided flow rate of the exhaust gas from the upstream exhaust pipe 11A to the exhaust supply pipe 40 based on the necessary oxygen amount Oxn, the oxygen concentration Oxc of the exhaust gas, the upstream exhaust flow rate QA, and the maximum exhaust gas amount that can be supplied to the combustion area 20. Then, the ECU 45 obtains a preset opening degree VPa3 of the variable valve 41 and a preset opening degree VPb3 of the exhaust throttle valve 42 based on the exhaust supply amount QAd and the upstream exhaust flow rate QA. The preset opening degree VPa3 of the variable valve 41 and the preset opening degree VPb3 of the exhaust throttle valve 42 are opening degrees at which the exhaust supply amount QAd of exhaust gas is divided to the exhaust supply pipe 40 from the upstream exhaust pipe 11A according to the upstream exhaust flow rate by collaboration of the variable valve 41 and the exhaust throttle valve 42.

To obtain the preset opening degree VPa3 of the variable valve 41 and the preset opening degree VPb3 of the exhaust throttle valve 42, the ECU 45 refers to a map 60 schematically shown in Fig. 2.

The map 60 shown in Fig. 2 is data based on the results of experiments and simulations performed in advance and stored in the storage of the ECU 45. The map 60 stores a map that shows a relationship between the exhaust supply amount QAd and the preset opening degree VPa3 of the variable valve 41 for each upstream exhaust flow rate QA and a map that shows a relationship between the exhaust supply amount QAd and the preset opening degree VPb3 of the exhaust throttle valve 42 for each upstream exhaust flow rate QA. The ECU 45 obtains the preset opening degree VPa3 of the variable valve 41 and the preset opening degree VPb3 of the exhaust throttle valve 42 based on the map 60 and outputs control signals indicating the obtained preset opening degrees to the variable valve 41 and the exhaust throttle valve 42.

When the exhaust supply amount QAd is calculated, the ECU 45 calculates an oxygen amount of the exhaust gas supplied to the combustion area 20 through the exhaust supply pipe 40 based on the exhaust supply amount QAd, the oxygen concentration Oxc of the exhaust gas, and the necessary oxygen amount Oxn and calculates the air supply amount QCd according to the difference between the oxygen amount and the necessary oxygen amount Oxn. Upon calculation of the air supply amount QCd, the ECU 45 calculates 0 as the air supply amount QCd when the oxygen amount of the exhaust supply amount QAd is equal to the necessary oxygen amount Oxn, e.g., when it is possible to supply the necessary oxygen amount Oxn of oxygen only with the exhaust gas because the engine is in a low speed state, with low load and the exhaust gas has a high oxygen concentration.

When the air supply amount QCd is calculated, the ECU 45 obtains the preset opening degree VPc3, which is an opening degree of the air valve 32, based on the air supply amount QCd and the intake air amount QC. The preset opening degree VPc3 of the air valve 32 is an opening degree for dividing the air supply amount QCd of intake air from the intake pipe 30 to the air supply pipe 31 according to the intake air amount at the moment.

To obtain the preset opening degree VPc3 of the air valve 32, the ECU 45 refers to a map 61 schematically shown in Fig. 3. The map 61 shown in Fig. 3 is data based on the results of experiments and simulations performed in advance and data stored in the storage of the ECU 45. The map 61 stores a map that shows a relationship between the air supply amount QCd and the preset opening degree VPc3 of the air valve 32 for each intake air amount QC. The ECU 45 obtains the preset opening degree VPc3 of the air valve 32 based on the map and outputs a control signal indicating the obtained preset opening degree VPc3 to the air valve 32.

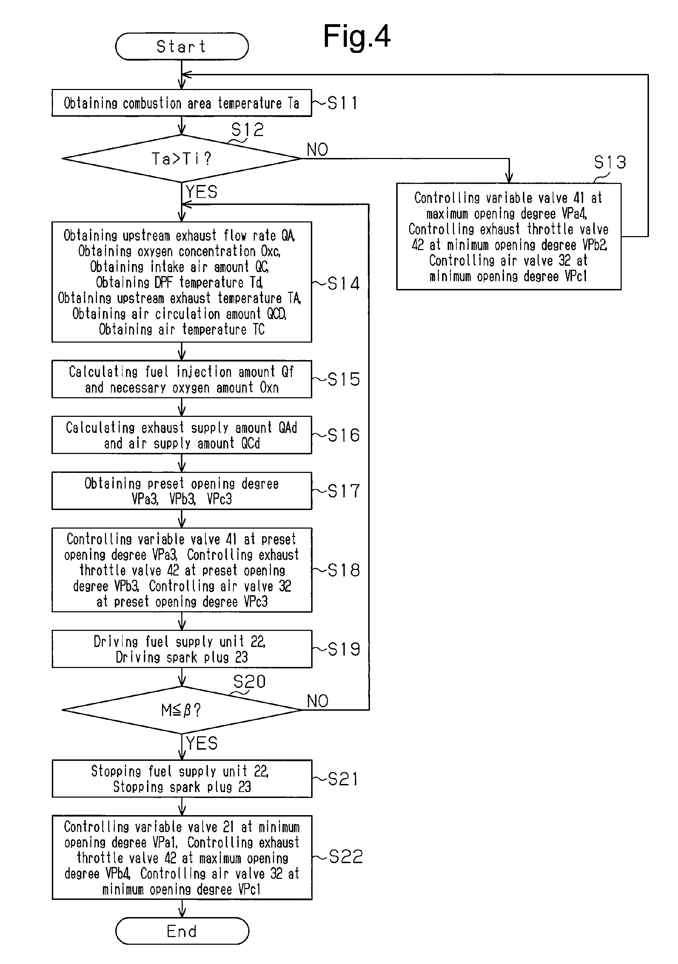

A procedure of the regeneration process executed by the ECU 45 will now be described with reference to Fig. 4. The ECU 45 calculates a deposition amount M of particulate matter on the DPF 12 based on the upstream exhaust flow rate QA and the differential pressure ΔP between the upstream exhaust pressure PA and the downstream exhaust pressure PB at predetermined control periods. The regeneration process is then started if the calculated deposition amount M is greater than the predefined threshold α. During the stop of the burner 15, the variable valve 41, the exhaust throttle valve 42, and the air valve 32 are maintained at the minimum opening degree VPa1, the maximum opening degree VPb4, and the minimum opening degree VPc1, respectively.

As shown in Fig. 4, the ECU 45 acquires the combustion area temperature Ta from the temperature sensor 55 (step S11). The ECU 45 then determines whether the combustion area temperature Ta exceeds the ignitable temperature Ti (step S12). When the combustion area temperature Ta is less than or equal to the ignitable temperature Ti (step S12: NO), the ECU 45 executes the process at step S13 and then moves to the process at step S11 again.

At step S13, the ECU 45 outputs a control signal indicating the maximum opening degree VPa4 to the variable valve 41 and outputs a control signal indicating the preset opening degree VPb2, which is a predetermined opening degree according to the upstream exhaust flow rate QA, to the exhaust throttle valve 42. At step S13, the ECU 45 also outputs a control signal indicating the minimum opening degree VPc1 to the air valve 32. In other words, the ECU 45 continues outputting a control signal indicating the maximum opening degree VPa4 to the variable valve 41, a control signal indicating the preset opening degree VPb2 to the exhaust throttle valve 42, and a control signal indicating the minimum opening degree VPc1 to the air valve 32 till the combustion area temperature Ta exceeds the ignitable temperature Ti in the process at step S12. This supplies some of the exhaust gas flowing through the upstream exhaust pipe 11A to the combustion area 20 via the exhaust supply pipe 40 and raises the combustion area temperature Ta to be the ignitable temperature Ti.

When the combustion area temperature Ta exceeds the ignitable temperature Ti at step S12 (step S12: YES), the ECU 45 executes the process at step S14. At step S14, the ECU 45 acquires various types of information, the upstream exhaust flow rate QA from the upstream exhaust flow sensor 51, the upstream exhaust temperature TA from the upstream exhaust temperature sensor 63, the air circulation amount QCD from the air circulation flow sensor 58, the air temperature TC from the air temperature sensor 59, the oxygen concentration Oxc of exhaust gas from the oxygen concentration sensor 54, the intake air amount QC from the intake air flow sensor 56, and the DPF temperature Td from the DPF temperature sensor 53. In the process at the next step S15, the ECU 45 calculates the fuel injection amount Qf and the necessary oxygen amount Oxn according to the fuel injection amount Qf based on the DPF temperature Td and the upstream exhaust flow rate QA.

At the next step S16, the ECU 45 obtains the exhaust supply amount QAd based on the oxygen concentration Oxc and the upstream exhaust flow rate QA, which are acquired at step S14. At the same step S16, the ECU 45 obtains the air supply amount QCd based on the obtained exhaust supply amount QAd, oxygen concentration Oxc, and necessary oxygen amount Oxn.

At the next step S17, the ECU 45 obtains the preset opening degree VPa3 of the variable valve 41 and the preset opening degree VPb3 of the exhaust throttle valve 42 based on the exhaust supply amount QAd, the upstream exhaust flow rate QA, and the map 60. At the same step S17, the ECU 45 obtains the preset opening degree VPc3 of the air valve 32 based on the air supply amount QCd and the map 61.

At the next step S18, the ECU 45 outputs a control signal indicating the preset opening degree VPa3 to the variable valve 41 to control the opening degree of the variable valve 41 to be the preset opening degree VPa3. The ECU 45 also outputs a control signal indicating the preset opening degree VPb3 to the exhaust throttle valve 42 to control the opening degree of the exhaust throttle valve 42 to be the preset opening degree VPb3. At the same step S18, the ECU 45 outputs a control signal indicating the preset opening degree VPc3 to the air valve 32 to control the opening degree of the air valve 32 to be the preset opening degree VPc3.

Thus, the exhaust supply amount QAd of exhaust gas is introduced as exhaust gas for combustion to the combustion area 20 through the exhaust supply pipe 40, and the air supply amount QCd of air is introduced as air for combustion to the combustion area 20 through the air supply pipe 31.

At step S19, the ECU 45 outputs a control signal to the fuel supply unit 22 that injects the fuel injection amount Qf of fuel into the combustion area 20. At the same step S19, the ECU 45 outputs a control signal to the spark plug 23 that drives the spark plug 23.

Thus, fuel injection by the fuel supply unit 22 generates air-fuel mixture in the combustion area 20, and the spark plug 23 ignites the air-fuel mixture to produce combustion gas containing flame F in the combustion area 20. The combustion gas is mixed with the exhaust gas flowing from the upstream exhaust pipe 11A into the housing 14 to raise the temperature of the exhaust gas flowing into the DPF 12. Then, the exhaust gas at the raised temperature flows into the DPF 12 to burn and remove the particulate matter deposited on the DPF 12.

At the next step S20, the ECU 45 again acquires the upstream exhaust flow rate QA from the upstream exhaust flow sensor 51 and the differential pressure ΔP from the upstream exhaust pressure sensor 62 and the downstream exhaust pressure sensor 52. The ECU 45 then calculates the deposition amount M based on the upstream exhaust flow rate QA and the differential pressure ΔP and determines whether the calculated deposition amount M is less than or equal to the threshold β.

At step S20, when the deposition amount M exceeds the threshold β (step S20: NO), the ECU 45 again executes the processes at steps subsequent to step S11. At step S20, when the deposition amount M is less than or equal to the threshold β (step S20: YES), the ECU 45 outputs a control signal to the fuel supply unit 22 that stops driving the fuel supply unit 22 and outputs a control signal to the spark plug 23 that stops driving the spark plug 23 (step S21).

At the next step S22, the ECU 45 outputs a control signal that indicates maintaining the minimum opening degree VPa1 to the variable valve 41, a control signal that indicates maintaining the maximum opening degree VPb4 to the exhaust throttle valve 42, and a control signal that indicates maintaining the minimum opening degree VPc1 to the air valve 32. The ECU 45 then finishes the regeneration process.

Operation of the burner 15 configured as above will now be described.

In the aforementioned burner 15, some of the exhaust gas flowing through the upstream exhaust pipe 11A is supplied to the combustion area 20 through the exhaust supply pipe 40. For this reason, compared to when only the intake air of the intake pipe 30 is supplied to the combustion area 20, air-fuel mixture is combusted with a low oxygen concentration. This lowers the combustion temperature and therefore suppresses the emission amount of NOx generated in the regeneration process.

In the burner 15, the exhaust supply pipe 40 is connected to the upstream exhaust pipe 11A. When the exhaust supply pipe 40 is connected to the downstream exhaust pipe 11 B, some of the exhaust gas that has passed through the DPF 12 is supplied to the combustion area 20 as exhaust gas for combustion. Such a configuration increases the amount of exhaust gas flowing into the DPF 12 by the exhaust supply amount QAd compared to when the exhaust supply pipe 40 is connected to the upstream exhaust pipe 11A. This increases exhaust gas flow resistance by the increased amount of exhaust gas. In this point, since the burner 15 has the exhaust supply pipe 40 connected to the upstream exhaust pipe 11A, some of the exhaust gas before passing through the DPF 12 is supplied to the combustion area 20 as exhaust gas for combustion. In other words, there is no chance that the amount of the exhaust gas flowing into the DPF 12 is increased by the exhaust supply amount QAd, which is in a case that the exhaust supply pipe 40 is connected to the downstream exhaust pipe 11 B. For this reason, the increase of the exhaust gas flow resistance is suppressed in the regeneration process. This suppresses the decrease of the fuel consumption and the decrease of the engine output, which are caused by supplying some of exhaust gas to the combustion area 20.

The exhaust gas that has flowed into the exhaust supply pipe 40 passes through the exhaust supply pipe 40 and the combustion area 20 in the flame stabilizer 16. For this reason, the exhaust gas that flows through the upstream exhaust pipe 11A without flowing into the exhaust supply pipe 40 loses less pressure before flowing into the DPF 12. In this point, the variable valve 41 capable of changing the flow path cross-sectional area of the exhaust supply pipe 40 is arranged on the exhaust supply pipe 40, and the burner 15 has the exhaust supply pipe 40 maintained in the blocked state during the stop of the burner 15. For this reason, compared to when some of exhaust gas is constantly supplied to the combustion area 20 through the exhaust supply pipe 40, the pressure loss of the exhaust gas before flowing into the DPF 12 is reduced. As a result, the burner 15 during the stop can obtain an exhaust efficiency equivalent to that in the case without the exhaust supply pipe 40. This suppresses the decrease of the fuel consumption and the decrease of the engine output caused by arranging the exhaust supply pipe 40.

In the burner 15, the exhaust throttle valve 42 capable of changing the flow path cross-sectional area of the upstream exhaust pipe 11A is arranged in the upstream exhaust pipe 11A downstream of the connection with the exhaust supply pipe 40. For this reason, the flow of exhaust gas into the exhaust supply pipe 40 is promoted by relatively decreasing the opening degree of the exhaust throttle valve 42. This expands the range of the exhaust supply amount QAd that can be supplied to the combustion area 20 compared to the case without the exhaust throttle valve 42.

Furthermore, the exhaust throttle valve 42 is arranged in the upstream exhaust pipe 11A downstream of the connection with the exhaust supply pipe 40. After exhaust gas flows into the exhaust supply pipe 40, the flow of the exhaust gas from the upstream exhaust pipe 11A to the exhaust supply pipe 40 is further promoted by decreasing the flow path cross-sectional area of the upstream exhaust pipe 11A with the exhaust throttle valve 42 compared to the case without the exhaust throttle valve 42. After flowing from the upstream side of the exhaust throttle valve 42 into the flame stabilizer 16, the exhaust gas is introduced to the downstream side of the exhaust throttle valve 42. This promotes supply of exhaust gas to the exhaust supply pipe 40 compared to the case with the exhaust supply pipe 40 connected to the downstream exhaust pipe 11 B, in which exhaust gas loses pressure when passing through the exhaust supply pipe 40 and the combustion area 20 in the flame stabilizer 16.

The burner 15 does not carry out fuel injection by the fuel supply unit 22 and air supply through the air supply pipe 31 until the combustion area temperature Ta exceeds the ignitable temperature Ti, while only supply of exhaust gas is carried out through the exhaust supply pipe 40. In other words, after the combustion area temperature Ta reaches the ignitable temperature Ti, fuel is injected by the fuel supply unit 22 and air is supplied through the air supply pipe 31.

Accordingly, vaporization of the fuel injected into the combustion area 20 is promoted and ignitability of the air-fuel mixture is improved compared to when fuel injection by the fuel supply unit 22 and supply of air through the air supply pipe 31 are carried out before the combustion area temperature Ta reaches the ignitable temperature Ti. When the vaporization of fuel is improved, the fuel supplied to the combustion area 20 is less likely to be discharged as non-burnt fuel. This reduces fuel necessary for raising the temperature of the DPF 12 to be the predetermined target temperature.

When it is possible to supply the necessary oxygen amount Oxn of oxygen to the combustion area 20 with exhaust gas, the burner 15 controls the air valve 32 at the minimum opening degree VPc1 and has the air supply pipe 31 in the blocked state. This suppresses the decrease of the intake air flow of the engine in the regeneration process.

After the exhaust gas from the exhaust supply pipe 40 joins the air from the air supply pipe 31 in the joining chamber 21 included in the flame stabilizer 16, the burner 15 introduces the exhaust gas and the air to the combustion area 20. In other words, the exhaust gas mixed with the air in the joining chamber 21 is introduced to the combustion area 20. For this reason, compared to when the exhaust gas from the exhaust supply pipe 40 and the air from the air supply pipe 31 are separately supplied to the combustion area 20, localized formation of a portion with a high oxygen concentration is suppressed in the combustion area 20. As a result, it is less likely that a portion at a high combustion temperature is locally formed, and an emission amount of NOx generated in the regeneration process is limited.

As described above, the burner 15 according to the first embodiment provides the following effects (advantages).
(1) When some of exhaust gas is supplied to the combustion area 20 through the exhaust supply pipe 40, the combustion temperature of air-fuel mixture decreases. This suppresses an emission amount of NOx generated in the regeneration process.
(2) In the burner 15, the exhaust supply pipe 40 is connected to the upstream exhaust pipe 11A. For this reason, the decrease of the exhaust efficiency is limited in the regeneration process. This suppresses the decrease of the fuel consumption and the decrease of the engine output caused by supplying some of the exhaust gas that has passed through the exhaust gas purification device 10 to the combustion area 20.
(3) During the stop of the burner 15, the variable valve 41 maintains the exhaust supply pipe 40 in the blocked state. For this reason, the decrease of the exhaust efficiency is suppressed during the stop. This suppresses the decrease of the fuel consumption and the decrease of the engine output caused by arranging the exhaust supply pipe 40.
(4) The exhaust throttle valve 42 is arranged in the upstream exhaust pipe 11A downstream of the connection with the exhaust supply pipe 40. For this reason, the range of the exhaust supply amount QAd that can be supplied to the combustion area 20 is expanded.
(5) In the burner 15, the amount of exhaust gas supplied to the exhaust supply pipe 40 is adjusted by collaboration of the variable valve 41 and the exhaust throttle valve 42. For this reason, compared to a burner without one of the variable valve 41 and the exhaust throttle valve 42, the amount of exhaust gas supplied to the exhaust supply pipe 40 is adjusted very accurately. As a result, the difference between the calculated exhaust gas supply amount and an actual exhaust gas supply amount is decreased.
(6) Exhaust gas is supplied to the combustion area 20 only through the exhaust supply pipe 40 until the combustion area temperature Ta exceeds the ignitable temperature Ti. This improves ignitability of air-fuel mixture and reduces fuel necessary for raising the temperature of the DPF 12 to the predetermined target temperature.
(7) When it is possible to supply the necessary oxygen amount Oxn of oxygen only with exhaust gas, the air supply pipe 31 is blocked. This suppresses the decrease of the intake air amount of the engine.
(8) After joining in the joining chamber 21, the exhaust gas for combustion and the air for combustion are introduced to the combustion area 20. This suppresses localized formation of a portion at a high combustion temperature and further suppresses an emission amount of NOx generated in the regeneration process.
(9) The exhaust supply pipe 40, which is a pipe connected to the flame stabilizer 16, serves as an exhaust supply pipe. For this reason, compared to when the flame stabilizer 16 includes an exhaust supply pipe that supplies combustion gas and some of exhaust gas to the combustion area 20, the size of the flame stabilizer 16 is reduced.
(10) During the stop of the burner 15, the variable valve 41 is maintained in the blocked state. For this reason, the exhaust throttle valve 42 is controlled at a relatively small opening degree during the stop of the burner 15, and it is possible for the exhaust throttle valve 42 to function as an exhaust brake.

### Second Embodiment

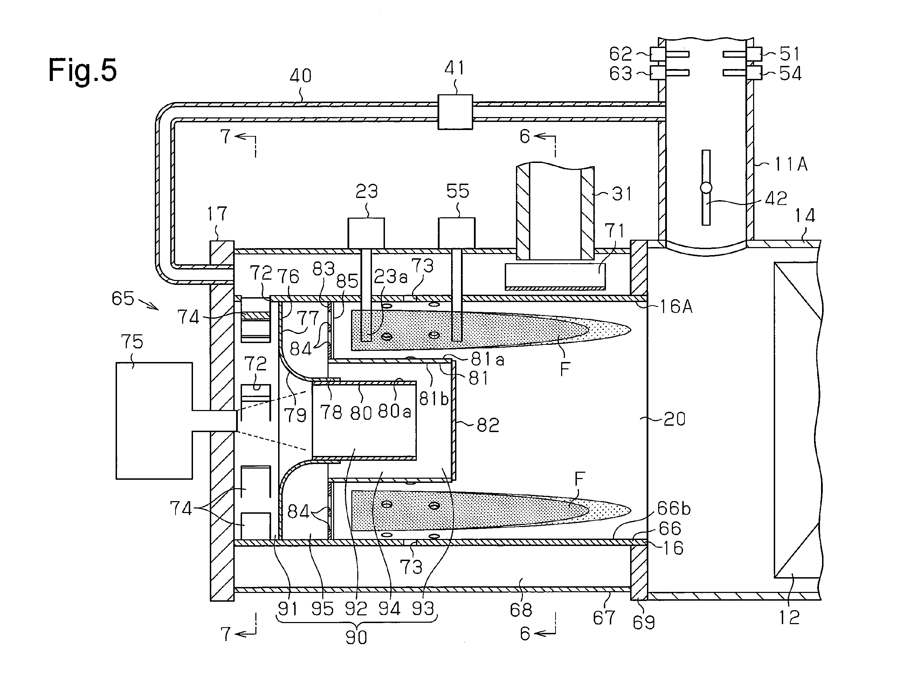

A burner for an exhaust gas purification device according to a second embodiment of the present disclosure will now be described with reference to Figs. 5 to 7. The burner 65 for an exhaust gas purification device according to the second embodiment has the same procedure of the process of raising the temperature of exhaust gas as the burner 15 for an exhaust gas purification device according to the first embodiment, but is different in that the air-fuel mixture generated in the premixing chamber is supplied to the combustion chamber. For this reason, in the second embodiment, those components different from the corresponding components of the first embodiment will be described in detail. Like or the same reference numerals are given to those components that are like or the same as the corresponding components of the first embodiment and detailed explanations are omitted.

As shown in Fig. 5, in the burner for an exhaust gas purification device 65 (hereinafter, simply referred to as a burner 65), the flame stabilizer 16 has a tubular shape with a closed end that is opened toward the DPF 12. In particular, the flame stabilizer 16 has a cylindrical tube shape. The basal wall 17 of the flame stabilizer 16 closes an end of the inner tube 66 in the flame stabilizer 16, and extends from the end of the inner tube 66 outward in the radial direction of the inner tube 66.

The edge of the basal wall 17 in the flame stabilizer 16 is coupled to a cylindrical outer tube 67, which has a cylindrical tube shape. The outer tube 67 extends from the edge of the basal wall 17 toward the DPF 12 and substantially surrounds the entire flame stabilizer 16. One of two ends of the outer tube 67 that is close to the DPF 12 is closed with an annular closing wall 69. The closing wall 69 is coupled to the end of the housing 14 that extends on the opposite side from the basal wall 17. A gap between the outer circumferential face of the inner tube 66 and the outer tube 67 is a joining chamber 68, in which exhaust gas joins air. The inner tube 66 and the outer tube 67 serve as one example of the first partition portion, which partitions off the joining chamber 68 in the flame stabilizer 16. The exhaust supply pipe 40 is fixed to the basal wall 17 and introduces some of the exhaust gas flowing through the upstream exhaust pipe 11A as exhaust gas for combustion to the joining chamber 68.

The air supply pipe 31 is connected to the outer circumferential face of the outer tube 67. A guide plate 71 is arranged on the inner circumferential face of the outer tube 67 near the outlet of the air supply pipe 31. The guide plate 71 is arranged to face the outlet of the air supply pipe 31 and is spaced from the air supply pipe 31. The air for combustion entering the joining chamber 68 from the air supply pipe 31 is guided by the guide plate 71 to flow along the outer circumferential face of the inner tube 66. The inner tube 66 and the outer tube 67 constitute an air supply pipe in the burner 65.

One of two ends of the inner tube 66 that is close to the basal wall 17 includes a plurality of first introduction ports 72 extending through the inner tube 66. The first introduction ports 72 are lined up at equal intervals in the circumferential direction of the inner tube 66. A space surrounded by the flame stabilizer 16 includes the combustion area 20. The first introduction ports 72 send some of the exhaust gas for combustion that has entered the joining chamber 68 and some of air for combustion to the inside of the flame stabilizer 16.

One of the two ends of the inner tube 66 that is close to the DPF 12 includes an outlet port 16A, from which flame F projects. The portion of the inner tube 66 that is closer to the outlet port 16A than the first introduction ports 72 includes a plurality of second introduction ports 73 extending through the inner tube 66. The second introduction ports 73 are lined up at equal intervals in the circumferential direction of the inner tube 66. The second introduction ports 73 send some of the exhaust gas for combustion that has entered the joining chamber 68 and some of air for combustion to the inside of the flame stabilizer 16.

A raised piece 74 is formed at each open edge of the first introduction ports 72 by cutting a portion of the circumferential wall of the inner tube 66 and raising the portion inward. The raised pieces 74 guide exhaust gas for combustion and air for combustion to the inside of the flame stabilizer 16 through the first introduction ports 72 and swirls the exhaust gas for combustion and the air for combustion inside the flame stabilizer 16.

A fuel supply unit 75 is fixed to the basal wall 17 and supplies fuel to the inside of the flame stabilizer 16. The distal end of the fuel supply unit 75 includes a supply port and is arranged inside the flame stabilizer 16. The fuel supply unit 75 is connected to a fuel pump for supplying fuel to the engine through a fuel valve. When the fuel valve is open, fuel is sent from the fuel pump to the fuel supply unit 75. The fuel sent to the fuel supply unit 75 is vaporized in the fuel supply unit 75 and injected inside the flame stabilizer 16.

A coupling portion 76 is coupled to the inner circumferential face 66b of the inner tube 66 between the first introduction ports 72 and the second introduction ports 73. The coupling portion 76 includes the flange 77, the insertion portion 78, and the radially-narrowed portion 79, which are integrally formed.

The flange 77 has an annular shape that lies along the inner circumferential face 66b of the inner tube 66 and is coupled to the inner circumferential face 66b of the inner tube 66 entirely in the circumferential direction of the inner circumferential face 66b. The flange 77 partitions off a space sandwiched by the flange 77 and the basal wall 17 in the space surrounded by the inner tube 66.

The space sandwiched by the flange 77 and the basal wall 17 is a first mixing chamber 91. Exhaust gas for combustion and air for combustion enter the first mixing chamber 91 through the first introduction ports 72, and fuel enters the first mixing chamber 91 from the fuel supply unit 75. The exhaust gas for combustion and the air for combustion swirl around the axis of the flame stabilizer 16 in the first mixing chamber 91 and are mixed with the fuel injected toward the swirling center of the exhaust gas for combustion and the air for combustion.

The insertion portion 78 is shaped as a cylindrical tube extending from the radially-narrowed portion 79 toward the outlet port 16A and has a smaller diameter than the inner diameter of the flange 77. The radially-narrowed portion 79 is shaped as a truncated cone extending from the inner edge of the flange 77 toward the outlet port 16A and is coupled to the flange 77 and the insertion portion 78.

A cylindrical first inner tube 80, which has a cylindrical tube shape is inserted into the insertion portion 78. One of two ends of the first inner tube 80 that is close to the basal wall 17 is connected to the insertion portion 78. The flange 77 of the coupling portion 76 is coupled to the inner circumferential face 66b of the inner tube 66, and the insertion portion 78 of the coupling portion 76 is coupled to the outer circumferential face 80a of the first inner tube 80. The coupling portion 76 closes a gap between the inner circumferential face 66b of the inner tube 66 and the outer circumferential face 80a of the first inner tube 80. One of the two ends of the first inner tube 80 that is close to the outlet port 16A is opened.

A second inner tube 81 is arranged around the first inner tube 80 to surround the first inner tube 80. The one of the two ends of the first inner tube 80 that is close to the outlet port 16A is surrounded by a cylindrical second inner tube 81, which has a cylindrical tube shape. One of two ends of the second inner tube 81 that is close to the outlet port 16A is closer to the outlet port 16A than the one of the two ends of the first inner tube 80 that is close to the outlet port 16A. One of the two ends of the second inner tube 81 that is close to the basal wall 17 is closer to the outlet port 16A than the one of the two ends of the first inner tube 80 that is close to the basal wall 17.

The opening end of the two ends of the second inner tube 81 that is close to the outlet port 16A is closed by the closing wall 82. The one of the two ends of the second inner tube 81 that is close to the basal wall 17 is fixed to the inner circumferential face 66b of the inner tube 66 with an annular supporting plate 83.

The inner edge of the supporting plate 83 is entirely coupled to the outer circumferential face 81a of the second inner tube 81. The outer edge of the supporting plate 83 is entirely coupled to the inner circumferential face 66b of the flame stabilizer 16. A plurality of communication passages 84 extends through the supporting plate 83. The space that is closer to the outlet port 16A than the supporting plate 83 is in communication with the space that is closer to the basal wall 17 than the supporting plate 83 through the communication passages 84. A wire mesh 85 is attached to the supporting plate 83 and covers the communication passages 84.

A second mixing chamber 92 is partitioned off in the space surrounded by the flame stabilizer 16. The second mixing chamber 92 is a space surrounded by the inner circumferential face of the first inner tube 80. After exiting the first mixing chamber 91, the air-fuel mixture enters the second mixing chamber 92.

A third mixing chamber 93 is partitioned off in the space surrounded by the flame stabilizer 16. The third mixing chamber 93 is a space surrounded by the inner circumferential face 81b of the second inner tube 81 and the closing wall 82 and located closer to the outlet port 16A than the second mixing chamber 92. The air-fuel mixture exiting the second mixing chamber 92 enters the third mixing chamber 93.

A fourth mixing chamber 94 is partitioned off in the space surrounded by the flame stabilizer 16. The fourth mixing chamber 94 is formed as a gap between the outer circumferential face 80a of the first inner tube 80 and the inner circumferential face 81 b of the second inner tube 81. The air-fuel mixture exiting the third mixing chamber 93 enters the fourth mixing chamber 94.

A fifth mixing chamber 95 is partitioned off in the space surrounded by the flame stabilizer 16. The fifth mixing chamber 95 is formed as a space surrounded by the inner circumferential face 66b of the inner tube 66, the supporting plate 83, and the coupling portion 76. The air-fuel mixture exiting the fourth mixing chamber 94 enters the fifth mixing chamber 95.

The spark plug 23 is fixed to the outer circumferential face of the outer tube 67. The ignition portion 23a of the spark plug 23 extends inside the inner tube 66 from the inner circumferential face 66b of the inner tube 66. The ignition portion 23a is arranged in a gap between the inner circumferential face 66b of the inner tube 66 and the outer circumferential face 81a of the second inner tube 81 and located closer to the outlet port 16A than the supporting plate 83. The temperature sensor 55 for sensing the combustion area temperature Ta is fixed to the portion of the outer circumferential face of the outer tube 67 that is located closer to the outlet port 16A than the spark plug 23.

The first mixing chamber 91, the second mixing chamber 92, the third mixing chamber 93, the fourth mixing chamber 94, and the fifth mixing chamber 95 constitute one premixing chamber 90 for generating air-fuel mixture containing fuel, exhaust gas, and air. The gap between the inner circumferential face 66b of the inner tube 66 and the outer circumferential face 81a of the second inner tube 81 and the space in the flame stabilizer 16 that is closer to the outlet port 16A than the closing wall 82 constitute the combustion area 20. The coupling portion 76, the first inner tube 80, the second inner tube 81, the closing wall 82, and the supporting plate 83 serve as one example of a second partition portion, which partitions off the premixing chamber 90 in the flame stabilizer 16.

The air-fuel mixture generated in the first mixing chamber 91 passes through the second mixing chamber 92 and flows once toward the outlet port 16A. Then, after passing through the second mixing chamber 92, the air-fuel mixture passes through the third mixing chamber 93 and the fourth mixing chamber 94 and returns toward the basal wall 17. As a result, after turning back in the axial direction of the flame stabilizer 16, the air-fuel mixture generated in the first mixing chamber 91 exits the fifth mixing chamber 95 to the combustion area 20 and is ignited.

For this reason, under the assumption that the length of the premixing chamber 90 is limited in the axial direction of the flame stabilizer 16, the mixed level of fuel and air for combustion is increased by the increase in the flow path of the air-fuel mixture. Alternatively, under the assumption that the mixed level of fuel and air for combustion is set at a predetermined level, the length of the premixing chamber 90 is saved in the axial direction of the flame stabilizer 16 by the turned-back portion of the flow path of the air-fuel mixture.

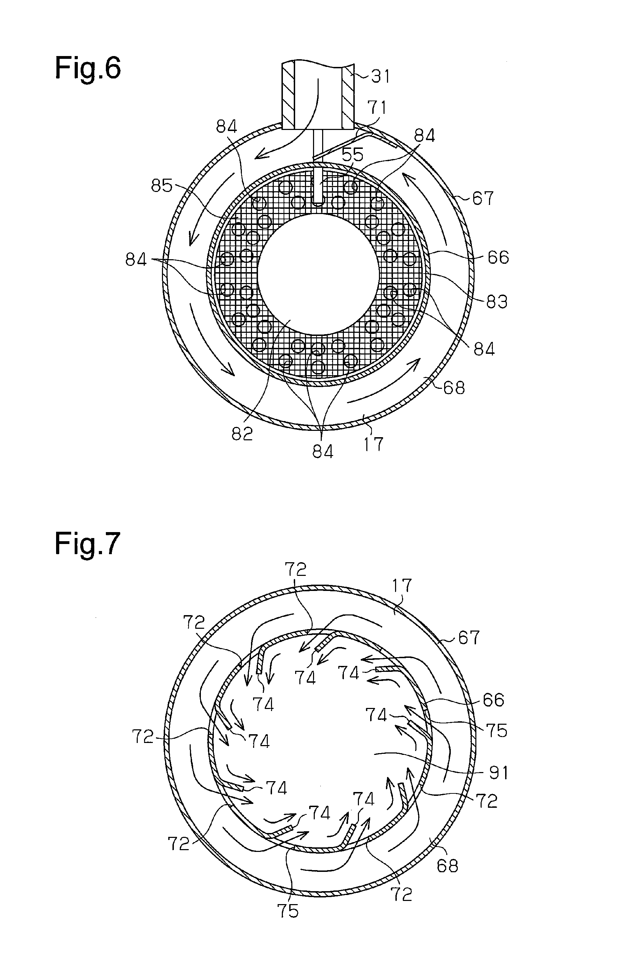

As shown in Fig. 6, the air for combustion entering the joining chamber 68 from the air supply pipe 31 is guided by the guide plate 71 to swirl along the outer circumferential face of the inner tube 66.

As shown in Fig. 7, the exhaust gas for combustion and air for combustion that enter the first mixing chamber 91 through the first introduction ports 72 are guided by the raised pieces 74 to swirl around the axis of the inner tube 66. In that case, the swirling direction of the exhaust gas for combustion and air for combustion in the first mixing chamber 91 is counterclockwise as viewed in Fig. 7 and is the same as the swirling direction of the air for combustion in the joining chamber 68. For this reason, compared to when the swirling direction of the exhaust gas for combustion and air for combustion in the first mixing chamber 91 differs from the swirling direction of the air for combustion in the joining chamber 68, the decrease in the swirling speed of the air for combustion that has joined exhaust gas for combustion is limited. As a result, the mixed level of air for combustion and fuel is improved.

As described above, the burner 65 according to the second embodiment provides the following effects (advantages) in addition to effects based on the effects (1) to (10).
(11) Since air-fuel mixture is generated in the premixing chamber 90, compared to the burner 15 according to the first embodiment, in which air-fuel mixture is generated and combusted in the combustion area 20, generation of the air-fuel mixture is carried out over a long path. For this reason, it is less likely to locally form a portion at a high combustion temperature in the combustion area 20 and an emission amount of NOx is suppressed.
(12) Exhaust gas is supplied from the joining chamber 68 to the combustion area 20 through the second introduction ports 73. For this reason, compared to when exhaust gas is not supplied from the joining chamber 68 to the combustion area 20, the combustion temperature decreases. This further suppresses the emission amount of NOx.

The first and second embodiments may be modified in the following forms if necessary.

In the second embodiment, the partition portion that separates the premixing chamber 90 and the combustion area 20 may be, e.g., a flat plate arranged inside the inner tube 66 and perpendicular to the axial direction of the inner tube 66. In other words, the partition portion that separates the premixing chamber 90 and the combustion area 20 may be any member that partitions the space defined by the inner tube 66 into a space for generating air-fuel mixture and a space for igniting the air-fuel mixture.

When the partition portion includes the coupling portion 76, the first inner tube 80, the second inner tube 81, the closing wall 82, and the supporting plate 83, the space for generating air-fuel mixture and the space for igniting the air-fuel mixture are connected with a complex pipe. For this reason, to improve the mixed level of the air for combustion, exhaust gas for combustion, and fuel, it is preferable for the partition portion to include the coupling portion 76, the first inner tube 80, the second inner tube 81, the closing wall 82, and the supporting plate 83.

The burner 65 according to the second embodiment may be modified as long as the premixing chamber 90 is separated from the combustion area 20. For this reason, when being introduced to the premixing chamber 90, the air for combustion and exhaust gas for combustion may be supplied to the premixing chamber 90 without traveling around the inner tube 66, e.g., with the air supply pipe 31 and the exhaust supply pipe 40 connected to the basal wall 17. Alternatively, the air for combustion and the exhaust gas for combustion may be separately supplied to the premixing chamber 90.

In the second embodiment, the second introduction ports 73 may be omitted. In other words, exhaust gas for combustion and air for combustion may be supplied to the combustion area 20 only through the first introduction ports 72.

In the first embodiment, the outer tube that partitions off the joining chamber 21 is not limited to the housing 14 of the exhaust gas purification device 10 but may be a tubular component that surrounds the circumferential wall of the inner tube 18 and has a circumferential wall surrounded by the housing 14. In other words, the first partition portion, which partitions off the joining chamber 21, may be modified as long as having a structure that partitions off a joining chamber in which exhaust gas joins air in the flame stabilizer 16.

In the first embodiment, the flame stabilizer 16 may be configured without the joining chamber 21. In other words, the exhaust gas from the exhaust supply pipe 40 and the air from the air supply pipe 31 may be supplied to the combustion area 20 without joining in the joining chamber 21. In the burner for an exhaust gas purification device configured as above, to avoid localized formation of a region with a high oxygen concentration in the combustion area 20, it is preferable to provide a swirling flow forming portion for forming a swirling flow of exhaust gas and air in the combustion area 20.

The air valve 32 may be constantly in the open state during execution of the process of raising the temperature of exhaust gas.

In the first embodiment, when the combustion area temperature Ta is lower than the ignitable temperature Ti, the fuel supply unit 22 may carry out fuel supply to the combustion area 20. In the second embodiment, when the combustion area temperature Ta is lower than the ignitable temperature Ti, the fuel supply unit 75 may carry out fuel supply to the premixing chamber 90.

The burner 15, 65 may be configured without both the variable valve 41 and the exhaust throttle valve 42. With the configuration, compared to the case with both the variable valve 41 and the exhaust throttle valve 42, a simple structure can realize supply of exhaust gas to the combustion area 20.

The burner 15, 65 may be configured without the variable valve 41. The burner 15, 65 configured as above can realize the inhibition state, in which the flow of exhaust gas into the exhaust supply pipe 40 is inhibited, e.g., by controlling the exhaust throttle valve 42 at the maximum opening degree VPb4. Alternatively, the burner 15, 65 configured as above can realize the promotion state, in which the flow of exhaust gas into the exhaust supply pipe 40 is promoted, by controlling the exhaust throttle valve 42 at a smaller opening degree than the maximum opening degree VPb4.

The burner 15, 65 may be configured without the exhaust throttle valve 42. The burner 15, 65 configured as above can realize the inhibition state, in which the flow of exhaust gas into the exhaust supply pipe 40 is inhibited, e.g., by controlling the variable valve 41 at the minimum opening degree VPa1. Alternatively, the burner 15, 65 configured as above can realize the promotion state, in which the flow of exhaust gas into the exhaust supply pipe 40 is promoted, by controlling the variable valve 41 at a greater opening degree than the minimum opening degree VPa1.

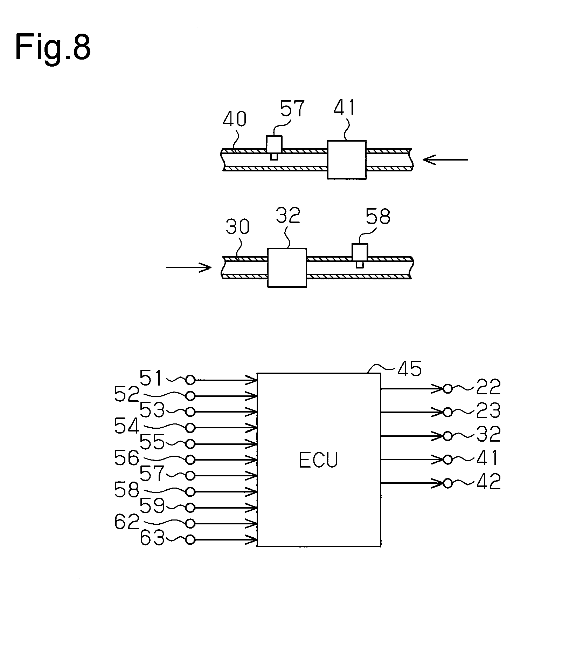

When the setting interval for the opening degree of the variable valve 41 is shorter than the calculation interval for the exhaust supply amount QAd, the opening degree of the variable valve 41 may be adjusted, e.g., in the following configuration. That is, as shown in Fig. 8, an exhaust circulation flow sensor 57 for detecting the mass flow rate of the exhaust gas flowing through the exhaust supply pipe 40 is attached to a part of the exhaust supply pipe 40 that is downstream of the variable valve 41. At the start of the regeneration process, the ECU 45 controls the opening degree of the exhaust throttle valve 42 to be the opening degree based on the exhaust supply amount QAd calculated by the ECU 45 and controls the opening degree of the variable valve 41 to be an intermediate opening degree from the minimum opening degree VPa1. The intermediate opening degree is intermediate between the minimum opening degree VPa1 and the maximum opening degree VPa4. After that, the ECU 45 may control the opening degree of the variable valve 41 by feedback control based on the detection value of the exhaust circulation flow sensor 57. The configuration effectively suppresses pulsation occurrence in association with the flow rate and pressure of the exhaust gas flowing through the exhaust supply pipe 40. The opening degree of the exhaust throttle valve 42 may be set in the similar way.

When the setting interval of the opening degree of the air valve 32 is shorter than the calculation interval of the air supply amount QCd, the air valve 32 may adjust the air supply amount QCd in the following configuration. As shown in Fig. 8, when the air supply amount QCd is calculated, the ECU 45 controls the opening degree of the air valve 32 to be a predetermined initial opening degree, which is greater than the minimum opening degree VPc1 and less than the maximum opening degree VPc4. After that, the ECU 45 may control the opening degree of the air valve 32 by feedback control based on the air circulation amount QCD, which is a detection value of the air circulation flow sensor 58. The configuration effectively controls pulsation occurrence in association with the flow rate and pressure of the air flowing through the air supply pipe 31.

The exhaust supply pipe 40 may be connected to the downstream exhaust pipe 11 B, not to the upstream exhaust pipe 11A. In the configuration, the exhaust throttle valve 42 is also arranged in the downstream exhaust pipe 11 B.

The burner for an exhaust gas purification device 15, 65 may be configured without the air supply pipe 31 and the air valve 32.

The process of raising the temperature of exhaust gas is not limited to the regeneration process of the DPF 12, but may be a process of raising the temperature of, e.g., a catalyst that purifies exhaust gas.

The fuel injected by the fuel supply unit 22, 75 may be supplied from a common rail, not by a fuel pump. A fuel pump may be used to supply fuel only to the fuel supply unit 22, 75.

In the first embodiment, the fuel supply unit is not limited to the fuel supply unit 22 for injecting fuel to the combustion area 20, but may be a portion that supplies the fuel vaporized in advance, e.g., using waste heat of exhaust gas, to the combustion area 20.

In the second embodiment, the fuel supply unit may supply fuel to the premixing chamber 90 by injecting liquid fuel as the fuel supply unit 22 does.

Ignition of air-fuel mixture is not limited to ignition by a spark plug, but may be performed by a glow plug, a laser spark device, and a plasma spark device. The ignition of air-fuel mixture may be performed by one of these or two or more of these.

Air for combustion is not limited to the intake air flowing through the intake pipe 30, but may be the air flowing through a pipe for supplying the compressed air compressed by a compressor to an air tank of the brake or the air supplied by a blower solely used for a burner of an exhaust gas purification device. The compressor or the blower is likely to use engine output as a power source. For this reason, the decrease of the engine output is limited by controlling the air valve 32 in the closed state during the process of raising the temperature of exhaust gas.

The engine with the burner for an exhaust gas purification device may be a gasoline engine.

### DESCRIPTION OF REFERENCE NUMERALS

10: exhaust gas purification device, 11A: upstream exhaust pipe, 11B: downstream exhaust pipe, 12: diesel particulate filter, 12: DPF, 14: housing, 15: burner for an exhaust gas purification device, 16: flame stabilizer, 17: basal wall, 18: inner tube, 19: closing wall, 20: combustion area, 21: joining chamber, 22: fuel supply unit, 23: spark plug, 23a: ignition portion, 24: ignition point, 30: intake pipe, 31: air supply pipe, 32: air valve, 33: first introduction port, 34: second introduction port, 40: exhaust supply pipe, 41: variable valve, 42: exhaust throttle valve, 45: ECU, 51: upstream exhaust flow sensor, 52: upstream exhaust pressure sensor, 53: DPF temperature sensor, 54: oxygen concentration sensor, 55: temperature sensor, 56: intake air flow sensor, 57: exhaust circulation flow sensor, 58: air circulation flow sensor, 59: air temperature sensor, 60, 61: map, 62: upstream exhaust pressure sensor, 63: upstream exhaust temperature sensor, 65: burner for an exhaust gas purification device, 66: inner tube, 66b: inner circumferential face, 67: outer tube, 68: joining chamber, 69: closing wall, 71: guide plate, 72: first introduction port, 73: second introduction port, 74: raised piece, 75: fuel supply unit, 76: coupling portion, 77: flange, 78: insertion portion, 79: radially-narrowed portion, 80: first inner tube, 80a: outer circumferential face, 81: second inner tube, 81a: outer circumferential face, 82: closing wall, 83: supporting plate, 84: communication passage, 85: wire mesh, 90: premixing chamber, 91: first mixing chamber, 92: second mixing chamber, 93: third mixing chamber, 94: fourth mixing chamber, and 95: fifth mixing chamber.

## Claims

1. A burner for an exhaust gas purification device, comprising:
an exhaust pipe, through which exhaust gas flows from an engine;
a tubular flame stabilizer having a space in which fuel is combusted; and
an exhaust supply pipe that is connected to the exhaust pipe and the flame stabilizer and supplies the exhaust gas to the space inside the flame stabilizer.

2. The burner for an exhaust gas purification device according to claim 1, wherein
the exhaust pipe is connected to an exhaust gas purification device for purifying exhaust gas,
the exhaust supply pipe is connected to a portion of the exhaust pipe that is located upstream of the exhaust gas purification device, so that the exhaust gas flows into the exhaust supply pipe from the exhaust pipe.

3. The burner for an exhaust gas purification device according to claim 2, further comprising an adjustment portion for adjusting an amount of the exhaust gas flowing from the exhaust pipe into the exhaust supply pipe, wherein
the adjustment portion has a inhibition state in which flow of the exhaust gas into the exhaust supply pipe is inhibited and a promotion state in which the flow of the exhaust gas into the exhaust supply pipe is promoted, and
the inhibition state is switched to the promotion state when combustion of the fuel is started in the space inside the flame stabilizer.

4. The burner for an exhaust gas purification device according to claim 3, wherein
the adjustment portion includes a variable valve for changing a flow path cross-sectional area of the exhaust supply pipe, and
the variable valve is maintained in a closed state in the inhibition state.

5. The burner for an exhaust gas purification device according to claim 3 or 4, wherein
the adjustment portion includes an exhaust throttle valve for changing a flow path cross-sectional area of the exhaust pipe, and
the exhaust throttle valve is arranged in a portion of the exhaust pipe that is located upstream of the exhaust gas purification device and downstream of a connection between the exhaust pipe and the exhaust supply pipe.

6. The burner for an exhaust gas purification device according to any one of claims 1 to 5, further comprising:
a fuel supply unit for supplying fuel to the space inside the flame stabilizer; and
a temperature sensor for sensing a temperature of the space inside the flame stabilizer,
wherein the fuel supply unit supplies the fuel when a sensed value of the temperature sensor exceeds a predetermined threshold.

7. The burner for an exhaust gas purification device according to any one of claims 1 to 6, further comprising:
an air supply pipe for supplying air to the space inside the flame stabilizer; and
an air valve that is arranged in the air supply pipe and changes a flow path cross-sectional area of the air supply pipe,
wherein the air valve is in a closed state when the fuel is combusted in the space inside the flame stabilizer.

8. The burner for an exhaust gas purification device according to any one of claims 1 to 7, further comprising a first partition portion that partitions off a joining chamber in the flame stabilizer, wherein the exhaust gas joins air in the joining chamber.

9. The burner for an exhaust gas purification device according to any one of claims 1 to 8, further comprising:
a second partition portion that partitions off a premixing chamber in the flame stabilizer, wherein air-fuel mixture containing the fuel, the exhaust gas, and air is generated in the premixing chamber; and
an ignition portion that is arranged in the space inside the flame stabilizer and ignites the air-fuel mixture generated in the premixing chamber.
